Europäisches Patentamt

**European Patent Office**

**Office européen des brevets**

(19)

(11) Numéro de publication: **0 033 688**
**B1**

(12) **FASCICULE DE BREVET EUROPEEN**

(45) Date de publication du fascicule du brevet: **22.02.84**

(51) Int. Cl.³: **C 04 B 7/44, F 27 B 1/00**

(21) Numéro de dépôt: **81400123.6**

(22) Date de dépôt: **28.01.81**

(54) Procédé et dispositif de fabrication de clinker de ciment.

(30) Priorité: **30.01.80 FR 8002001**

(43) Date de publication de la demande:
**12.08.81 Bulletin 81/32**

(45) Mention de la délivrance du brevet:
**22.02.84 Bulletin 84/8**

(84) Etats contractants désignés:
**AT BE DE FR GB IT**

(56) Documents cités:
**EP - A - 0 000 739**
**AU - B - 424 421**
**DE - A - 2 022 557**
**DE - B - 1 223 293**
**FR - A - 2 356 895**
**US - A - 1 819 739**
**US - A - 4 022 629**
**US - A - 4 047 884**

**ZEMENT-KALK-GIPS, vol. 59, août 1970**
**Wiesbaden DE T. SANARA et al.: "La production**
**de ciment et de chaux dans un lit fluidisé", pages**
**343-347**

(73) Titulaire: **CREUSOT-LOIRE ENTREPRISES,**
**33, quai Galliéni**
**F-92150 Suresnes (FR)**

(73) Titulaire: **LAFARGE COPPEE**
**28, rue Emile Ménier**
**F-75782 Paris Cedex (FR)**

(72) Inventeur: **Namy, Gérald**
**13, cours Fauriel**
**F-42100 Saint-Etienne (FR)**

(74) Mandataire: **Le Brusque, Maurice**
**CREUSOT-LOIRE 15 rue Pasquier**
**F-75383 Paris Cedex 08 (FR)**

Courier Press, Leamington Spa, England.

Procédé et dispositif de fabrication de clinker de ciment

L'invention concerne un procédé et un dispositif de fabrication de clinker de ciment à partir de boulettes de matériaux crus contenant les éléments nécessaires pour la fabrication du clinker.

On sait que le clinker entrant dans la composition du ciment est obtenu par calcination d'un mélange intime de calcaire et d'argile dans un four de cimenterie.

Dans les procédés conventionnels par voie humide ou par voie séche, les matériaux de départ sont mélangés sous forme d'une pâte ou d'une poudre dont la cuisson est effectué dans un four tournant à l'intérieur duquel la matière alimentée par l'extrémité supérieure descend à contre-courant des gaz chauds produits par un brûleur alimenté en combustible et placé à l'extrémité inférieure. Ainsi, dans le document US—A 4 022629, on distingue successivement, dans le sens de progression de la matière, une zone de préchauffage dite de précalcination, une zone de calcination dans laquelle s'effectue la décarbonatation, une zone de clinkérisation et une zone de refroidissement. Etant donné que la température la plus élevée se trouve à la hauteur du brûleur, le refroidissement, s'effectue généralement dans des balonnets satellites entourant le four mais, en tout état de cause, le clinker déversé à la sortie du four se trouve à tres haute température.

On récupère en partie la chaleur du clinker en sortie du four tournant grâce à des refroidisseurs disposés à la sortie de celui-ci. Cependant, le fait d'introduire les produits solides sous forme de farine dans le four et de récupérer en sortie du four des produits solides de granulométrie variable rend difficile l'échange thermique du refroidisseur et aboutit à des températures de préchauffage de l'air relativement faibles. Il ne permet pas non plus d'utiliser dans l'installation toute la quantité d'air ainsi préchauffé.

On a donc essayé d'améliorer le rendement thermique des installations de cimenterie par divers moyens.

Dans les procédés par voie sèche, par exemple, on effectue généralement un préchauffage de la matière crue avant son entrée dans le four, en récupérant la chaleur des gaz sortant du four de clinkérisation. Cependant la matière, à l'entrée du four de cimenterie, se présentant sous forme de farine, l'échange de chaleur se fait à co-courants dans les gaines où circulent les gaz chauds qui entrainent la matière introduite. Il faut donc utiliser un échangeur de chaleur à plusieurs étages de cyclones, chaque cyclone recevant les gaz provenant de l'étage inférieur chargés de la matière récupérée à l'étage supérieur et séparant la matière pour la réintroduire dans la gaine d'alimentation de l'étage inférieur.

Par conséquent, bien que la farine soit entrainée à co-courant par les gaz, l'utilisation de plusieurs étages de cyclones, permet d'établir jusqu'à l'entrée dans le four tournant, une circulation globale de la matière à contre-courant des gaz, et d'améliorer partiellement l'échange de chaleur. Cependant, on est ainsi conduit, pour les installations de tonnage important, à réaliser des tours de préchauffage de très grande hauteur, de l'ordre de 50 m, et la température du gaz à la sortie du préchauffeur reste très élevée, de l'ordre de 300°C. On a aussi cherché à améliorer le bilan thermique en réalisant une précalcination des matières solides avant leur entrée dans le four de cimenterie, dans une chambre de mélange munie d'un brûleur et qui est placée sur le circuit des matières et des gaz entre le préchauffeur à suspension et le four tournant. Cette précalcination, qui a pour objet de décarbonater la matière avant son introduction dans le four tournant soulage de travail que celui-ci doit effectuer mais ne modifie sensiblement pas le rendement thermique global du procédé. Elle permet cependant d'utiliser un four tournant raccourci.

On a également imaginé d'incorporer à la matière crue un combustible liquide ou solide qui, en brûlant, apporte directement, à la matière une certaine quantité de chaleur au cours du processus de préparation de celle-ci. Ainsi, dans le document US—A—4 022 629 déjà cité, un combustible liquid ou solide est intimement mélangé à la matière crue. Il doit cependant être choisi de telle sorte que sa température d'inflammation soit inférieure à celle qui est atteinte dans la zone de précalcination, à l'extrémité supérieure du four, de telle sorte que la plus grande partie du combustible ne soit pas brûlée dans cette zone (colonne 6 lignes 37 à 41). Or, étant donné que, dans un four tournant, les gaz chaudes remontent à l'intérieur du four au contact de la matière qui descend, il n'est pas facile de contrôler avec précision la température atteinte par les gaz dans l'une ou l'autre zone du four, aucune séparation n'étant apportée entre celles-ci.

Pour améliorer le rendement thermique, on a proposé récemment de réaliser la clinkérisation en lit fluidisé, cette technique permettant de fonctionner à température pratiquement constante. Dans une installation de ce genre décrite par exemple dans la revue Zement-Kalk-Gips n° 8/1970 pages 343 à 347, l'appareil est séparé en trois zones superposés constituant un échangeur supérieur, une zone de clinkérisation en lit fluidisé et un échangeur inférieur. L'échangeur supérieur et l'échangeur inférieur fonctionnent de façon analogue à un four à cuve dans lequel les produits peuvent circuler par gravité en constituant un lit mobile.

Les produits crus, préalablement mis sous forme de boulettes ou pellets, sont introduits à la partie supérieure du dispositif au moyen d'un dispositif d'alimentation à débit réglable et circulent d'abord de haut en bas dans la zone de préchauffage dont la partie inférieure est en forme de trémie d'alimentation à la sortie de laquelle les boulettes constituent un talus qui se déverse dans la zone centrale de fluidisation où un brûleur permet d'élever la température jusqu'a la température de clinkérisation. Les gaz chauds récupérés au niveau de cette zone servent au préchauffage des matériaux crus et les matériaux calcinés à haute température sortant de la zone de fluidisation tombent dans la zone de refroidissement constituée par l'échangeur inférieur où ils sont refroidis au contact d'un courant d'air mis en circulation par un moyen de soufflage placé à la base de l'échangeur inférieur et remontant vers le haut à contre-courant de la circulation vers le bas des matières solides qui sont évacuées avec un débit réglable par un dispositif d'extraction placé à la partie inférieure de l'appareil.

Dans un tel dispositif, l'apport calorifique total se fait au niveau de la zone de clinkérisation qui mit en jeu des réactions comportant un grande proportion de réactions exothermiques. D'autre part, les matières solides, bien que préchauffées en utilisant les gaz chauds de la zone de clinkérisation, doivent encore subir un apport calorifique important pour arriver à la température de clinkérisation voisine de 1450°. Il faut en effet, obtenir, au niveau de ces zones, un apport de chaleur d'autant plus grand que la décarbonatation des produits crus à la température de 900° exige plus de 400 cal/kg de clinker (soit 90% du total de l'énergie) au niveau de cette zone. Les pellets qui dans le clinkériseur constituent un lit fluidisé doivent donc être au contact des gaz chauds de la combustion où des écarts de température importants entre fluide et matières facilitent des collages et exigent un temps de clinkérisation relativement long.

L'invention a pour objet de remédier à cet inconvénient en réalisant, dans une installation de ce type, une nette séparation entre la zone ou se déroule la décarbonatation et la zone de clinkérisation. De la sorte, on réalise chaque réaction à la bonne température, dans des conditions homogènes, et l'on apporte dans chaque zone la quantité de chaleur strictement nécessaire, ce qui permet de réaliser des economies dans la consommation globale de combustible, d'améliorer la qualité du clinker obtenu et de diminuer les risques de collages.

Conformément à l'invention, on alimente l'appareil en boulettes de dimensions supérieures à 6 mm, constituées de matière crue mélangée à une certaine quantité de carbone déterminée de telle sorte que sa combustion produise à l'intérieur de chaque boulette la quantité de chaleur juste nécessaire pour y effectuer la décarbonatation de la matière, compte tenu de la quantité de chaleur apportée de façon prévisible par les gaz circulant dans la zone de préchauffage, ceux-ci étant constitués au moins par une partie des gaz sortant de la zone de clinkérisation et introduits avec un débit réglable par les trémies distributrices au-dessus de la zone de·préchauffage et, pendant le fonctionnement, on règle en fonction les uns desautres les débits des gaz et des matières de telle sorte que la réaction de décarbonatation effectuée grâce à la combustion du carbone soit pratiquement achevée à la base de la zone de préchauffage et que les boulettes s'échauffent ensuite au contact des gaz chauds en descendant dans les trémies distributrices pour atteindre une température proche de la température de clinkérisation à leur entrée dans la zone de clinkérization dans laquelle on injecte la quantité de combustible juste nécessaire pour provoquer et entretenir la réaction de clinkérisation.

Selon une caractéristique supplémentaire, on règle la température des gaz remontant dans la zone de préchauffage par mélange des gaz sortant de la zone de clinkérisation avec un débit réglable de gaz ayant circulé dans la zone de refrodissement, prélevé à la partie supérieure de celle-ci et by-passant la zone de clinkérisation.

Le dispositif pour la mise en oeuvre du procédé selon l'invention se caractérise par le fait que le conduit resserré constituant la zone de clinkérisation en lit fluidisé est alimenté par une trémie centrale dans laquelle débouche la partie inférieure de chaque trémie distributrice et qui limite un espace fermé par un dôme dans lequel se rassamblent les gaz chauds sortant du conduit de fluidisation et relié par une conduite munie d'une vanne de réglage du débit à un organe de distribution régulière des gaz dans la partie supérieure de chaque trémie.

On avait déjà envisagè, dans la fabrication du ciment, d'incorporation du carbone dans des boulettes de matières crues. Un tel procédé est décrit par exemple dans le brevet australien N° 424.421. Cependant les boulettes ainsi formées sont traitées dans un four à cuve classique et la quantité de carbone qu'elles contiennent doit apporter les calories nécessaires à l'ensemble du processus de clinkérisation. On doit craindre, dans ces conditions, une répartition inégale des températures dans la charge qui conduit à une qualité irrégulière du produit obtenu.

Au contraire, dans le procédé selon l'invention, la quantité de carbone ajoutée aux boulettes est déterminée de façon à apporter dans la zone de préchauffage la quantité de chaleur juste nécessaire à la réaction de décarbonatation, le débit, la composition et la température des gaz en circulation étant réglés, ainsi que le débit de la matière vers le bas, de façon à permettre une combustion complète du carbone réalisant la décarbonatation totale de la matière avant l'entrée dans la zone de clinkérisation, la température des boulettes à leur sortie de la zone de préchauffage étant inférieure à celle à partir de laquelle elles risquent de s'agglutiner. Cette température, qui dépend de la matière première utilisée, peut être de 1150° par exemple. De la sortie, on évite les collages avant clinkérisation et l'on réalise, par contre, la clinkérisation des boulettes dans le lit fluidisé où des brûleurs apportent, par ailleurs, la chaleur nécessaire au démarrage et à l'entretien de la réaction de clinkérisation, le débit des matières étant réglé de telle sorte que celles-ci restent une dizaine de minutes dans cette sone à une température de l'ordre de 1400°C. Cet apport de chaleur supplémentaire est d'ailleurs faible, les réactions étant exothermiques.

Afin de bien faire comprendre l'invention, on va maintenant décrire à titre d'exemple non limitatif, en se reportant aux figures jointes en annexe, une installation pour la fabrication de clinker utilisée pour la mise en oeuvre du procédé suivant l'invention.

La figure 1 représente une vue en coupe par un plan vertical d'un four à cuve et ses installations annexes permettant la préparation de clinker de ciment à partir de pellets.

La figure 2 représente, à plus grande échelle, une vue partielle de l'installation représentée à la figure 1.

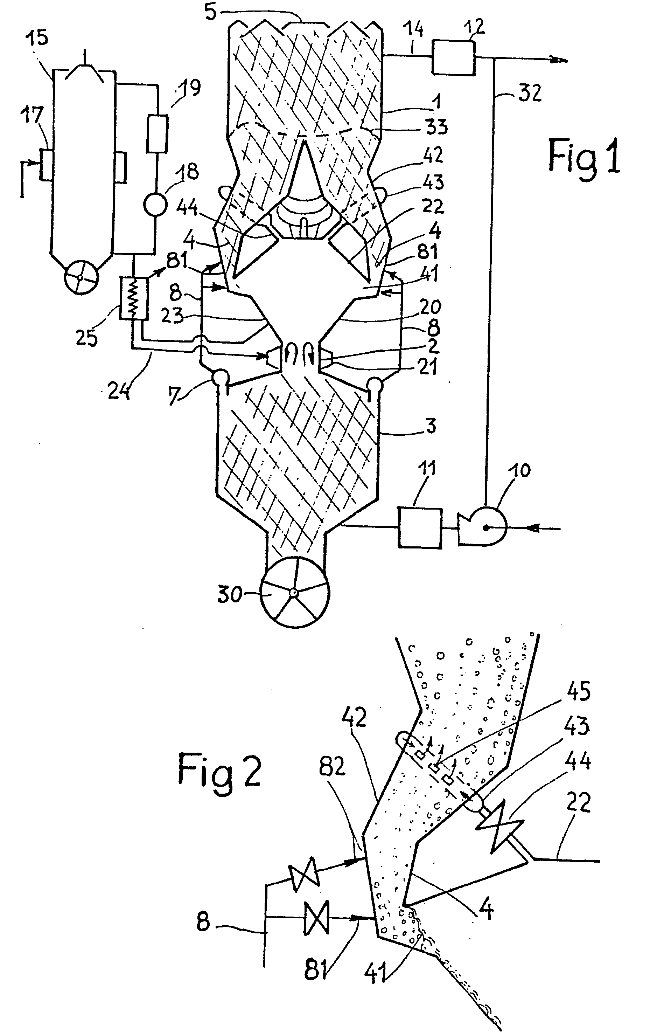

L'appareil représenté à la figure 1 comporte trois parties principales superposées 1, 2, 3 constituant respectivement l'échangeur supérieur 1, la zone de clinkérisation 2 et l'échangeur inférieur 3.

L'échangeur supérieur 1 et l'échangeur inférieur 3 constituent deux fours à cuve à axe vertical, de diamètre important, calculé en fonction du débit de boulettes que l'on désire traiter, alors que la zone de clinkérisation 2 est constituée par un conduit de diamètre plus faible.

L'échangeur supérieur 1 est relié à la zone centrale de clinkérisation par un ensemble de trémies distributrices 4 disposées symétriquement autour de l'axe et qui débouchent dans une trémie centrale 20 assurant l'alimentation en matières du conduit de clinkérisation 2, celui-ci débouchant dans l'axe de l'échangeur inférieur 3.

La partie supérieure de l'installation est munie d'un dispositif d'alimentation 5 permettant d'introduire des boulettes sous forme de couches successives régulières au niveau supérieur de la zone de préchauffage. Les boulettes ont été séchées préalablement, dans une installation annexe, par les gaz encore chauds sortant de l'appareil.

L'échangeur inférieur 3 est muni à sa base d'un dispositif 30 d'extraction des matières avec un débit réglable.

Une soufflerie 10 permet d'envoyer à la base de l'échangeur inférieur une quantité d'air réglée grâce à une vanne 11.

Les gaz parvenant au sommet de l'installation sont envoyés à la cheminée par l'intermédiaire d'une canalisation 14 et d'un registre 12.

L'air introduit par la soufflerie 10 peut être appauvri en oxygène grâce au prélèvement partiel effectué par la conduite 32 sur les fumées froides (qui sont constituées essentiellement de gaz carbonique et d'azote) sortant à la partie supérieure de l'appareil.

On établit ainsi, de bas en haut, une circulation de gaz comburant à contre-courant des matières qui circulent de haut en bas. La canalisation des gaz dans le conduit resserré 2 assure à cet endroit la fluidisation des matières. D'autre part un combustible solide pulverise, liquide ou gazeux, est injecté par une conduite 21 dans des brûlers répartis sur la périphérie du conduit 2 où il brûle au contact du gaz comburant circulant de bas en haut.

Les gaz chauds se rassemblent dans la trémie centrale 20 fermée par un dome 22. La plus grande partie de ces gaz chauds est injectée en 45 dans la partie supérieure élargie 42 des trémies 4 par l'intermédiaire de collecteurs 43 assurant une distribution régulière des gaz et alimentés à partir du dome 22 par des conduites 44 munies de vannes de réglage du débit de gaz.

Ces gaz chauds traversant de bas en haut l'échangeur supérieur 1 y assurent le préchauffage des boulettes introduites par le dispositif d'alimentation 5.

En outre, le carbone contenue dans les boulettes brûle au contact de ce gaz comburant chaud et assure la décarbonatation de la matière crue au sein de chaque boulette.

Les boulettes ainsi préchauffées et décarbonatées descendent dans les trémies 4 d'où elles sont distribuées par les orifices 41 dans la trémie d'alimentation 20 où elles s'échauffent encore avant d'arriver dans le clinkériseur 2 où est ménagé un lit fluidisé dont le débit est réglé de telle sorte que les boulettes y restent le temps nécessaire à l'achèvement de la réaction de clinkérisation. Les boulettes descendent alors dans l'échangeur inférieur 3 où elles se refroidissent en cédant leur chaleur au gaz circulant en sens inverse, avant d'être extraites par le bas.

Une conduite torique 7, disposée au-dessus du refroidisseur 3 ou à niveau inférieur, permet le prélèvement d'une partie des gaz réchauffés et le recyclage de ces gaz constitués principalement par de l'air chaud, grâce à un ensemble de canalisations 8 qui débouchent à la partie inférieure des trémies distributrices 4 par l'intermédiaire d'injecteurs 81 munis de vannes de réglage des débits (Fig. 2).

Le débit des matières distribuées par chaque trémie 4 peut avantageusement être régulé par cette injection d'air dans le talus ainsi constitué. En cas de panne du surpresseur le débit matière s'arrête automatiquement. On évite également de cette manière de balayer la partie inférieure de la trémie distributrice 4 par un fluide à grande vitesse qui accumulerait des poussières dans l'appareil. L'ensemble de l'appareil est déterminé de telle manière que la vitesse du fluide reste sensiblement constante quelle que soit la température, à l'exception de la zone de clinkérisation.

Un deuxième four à cuve 15 peut être utilisé avantageusement pour la production de semi-coke à partir de charbon, lignite ou autres produits carbonés. Ce four, qui est du type connu décrit, par exemple dans le brevet français n° 885.257 de la Sociétè ERIM, est alimenté en air par un dispositif 17 à sa partie centrale et produit des gaz combustibles évacués à la partie supérieure. Après lavage et degoudronnage par un dispositif 19, un surpresseur 18 permet d'une part de recycler une partie de ces gaz à la base du four ERIM 15 et d'autre part d'alimenter les brûleurs 21 de la zone de clinkérisation 2 du four de production de ciment.

Le semi-coke produit par le four ERIM 15 est incorporé aux boulettes de matériaux crus avec lesquelles on alimente le four de production de clinker.

Pour la mise en oeuvre du procédé on commence par réaliser le mélange des matières nécessaires pour la fabrication du clinker, dans les proportions voulues et l'on ajoute à ces matériaux du carbone en particules finement divisées, ce qui permet de réaliser un mélange intime entre les matières crues et le carbone.

On a, par exemple, préparé des boulettes renfermant 78% de carbonate et 22% d'argile auxquels on ajoute environ, par tonne de matière crue, 50 Kg de semi-coke provenant du four ERIM et broyé à la dimension convenable.

On effectue le bouletage de cette matière pour l'obtention de boulettes d'une dimension de l'ordre de 10 à 30 mm par exemple, ces boulettes se trouvant ensuite durcies par le préchauffage de façon à présenter une résistance mécanique suffisante lors de la clinkérisation en fluidisation.

Chacune des boulettes contient donc les proportions voulues de carbonate, d'argile, et éventuellement d'adjuvents pour sa transformation en clinker à haute température. De plus, la quantité de carbone sous forme de semi-coke contenue dans chacune des boulettes est déterminée de telle manière que la chaleur dégagée par la combustion de ce carbone permette, dans les conditions auxquelles la boulette est soumise dans le four à cuve, d'effectuer la décarbonatation du mélange crue et de porter la boulette à la température la plus élevée possible tout en évitant le collage des boulettes entre elles, par exemple 1100°C.

Dans la première partie du préchauffer 1 jusqu'au moment où les boulettes atteignent une température de l'ordre de 600°, se produit un complément du séchage des boulettes préalablement effectué à l'extérieur du four et certaines transformations des matières telles que distillation des gaz occlus, modifications de texture due aux liants utilisés etc....

Il est préférable que le séchage des boulettes ait lieu en majeure partie à l'extérieur du four, les gaz sortant alors par la conduite 14 à une température de 250°C environ. Ces gaz, qui sont, en pratique, constitués presque exclusivement de gaz carbonique et d'azote (30% $CO_2$, 70% $N_2$) servent au séchage préalable des boulettes puis sont envoyés à la cheminée.

En revanche, si l'on charge ait le four en boulettes humides, les gaz qui en sortent pourraient descendre à une température inférieure à leur point de rosée ce qui pourrait être gênant pour la bonne tenue des boulettes, en raison des condensations d'eau.

Le gaz comburant est constitué par un fluide oxydant à haute température, de l'ordre de 1200°, récupéré par le collecteur 7 et introduit par les injecteurs réglables 81 à la base des trémies distributrices 4, ce fluide se mélangeant, à la partie supérieure des trémies 4, aux gaz sortant à 1400° du clinkériseur 2 et introduits par les injecteurs 43.

Ce fluide chaud, qui circule de bas en haut à contre-courant des boulettes, provoque la combustion du carbone qui, suivant la nature du carbone utilisé, commence dans le préchauffeur 1 à partir de 500°C environ.

A partir de 600° commence la réaction endothermique de décarbonatation, ainsi qu'un certain nombre de réactions de caractère exothermique dues à des recombinaisons cristallines.

La quantité de carbone incorporée a été comme on l'a indiqué, déterminée en fonction de la composition des matières, de la qualité du carbone, des températures et des compositions prévisibles des gaz en circulation dans le four, pour que sa combustion apporte au sein de chaque boulette la quantité de chaleur nécessaire à la décarbonatation, compte tenu de la quantité de chaleur apportée par les gaz.

On règle en fonction l'une de l'autre le débit des matières et les débits des gaz sortant du clinkériseur 2 et sortant du préchauffeur 1 de telle sorte que le carbone soit complètement brûlé et que la décarbonatation soit achevée à la base du préchauffeur 1, si possible avant l'entrée dans les trémies 4, la température des boulettes ne dépassant pas 1100° environ à cet endroit.

On a représenté en 33, sur la figure 1, un exemple d'isotherme 1100° à l'intérieur du préchauffeur.

La combustion du carbone pourrait cependant se poursuivre pendant la descente des matériaux à l'intérieur des trémies 4, mais les quantités d'oxygène du fluide par rapport aux quantités de carbone des boulettes sont stoechiométriques et la vitesse de progression des boulettes est telle que de toute façon la totalité du carbone est brûlée avant que les boulettes ne parviennent au clinkériseur.

Ainsi, selon l'invention, une partie de la chaleur étant apportée par les gaz chauds, la quantité complémentaire juste nécessaire à la décarbonatation est apportée par le carbone incorporé aux boulettes et la zone de

**0 033 688**

décarbonatation est bien limitée à l'échangeur supérieur.

Au cours de leur progression vers le bas dans les trémies distributrices, les boulettes continuent à s'échauffer par contact avec le fluide chaud, pour atteindre une température voisine de 1200° à leur entrée dans le clinkériseur 2.

L'injection en 81, à la base des trémies distributrices 4, de fluide réchauffé dans le refroidisseur 3 à une température de l'ordre de 1200° permet de réguler aérodynamiquement le débit des matières déversées dans le clinkériseur 2. Eventuellement, une autre injection 82 du même fluide recyclé permet un certain réglage de la température des gaz remontant dans les trémies 4 et le préchauffeur 1. En cas de besoin, on peut d'ailleurs mélanger une certaine quantité d'air froid aux gaz venant du refroidisseur 3 ou bien prélever des gaz plus froids à un niveau moins élevé dans le refroidisseur 3.

L'injection d'air est faite de telle sorte que seulement une très faible partie de l'aire traverse la matière descendant dans la trémie distributrice 4; il en résulte que la vitesse de l'aire étant faible il n'y a pas d'entrainement et d'accumulation de poussières dans le circuit matière.

En cas de panne du supresseur d'air, le débit matière s'arrête automatiquement et il n'est pas nécessaire de prévoir une vanne d'arrêt.

L'arrivée des matières solides dans le clinkériseur et l'arrivée du fluide comburant chaud par la base du clinkériseur provenant de la partie supérieure du refroidisseur provoquent la formation d'un lit fluidisé à l'intérieur duquel pénètrent la flamme et les gaz de combustion des brûleurs 21 qui permettent de porter les boulettes à leur température de clinkérisation au voisinage de 1450°.

Les boulettes pénètrent dans le clinkériseur à une température proche de la température de clinkérisation, et les réactions de clinkérisation étant, dans une grande mesure, exothermiques, il suffit d'un appoint thermique faible au niveau du clinkériseur pour provoquer et entretenir la réaction de clinkérisation.

Comme on l'a vu, on peut utiliser, pour alimenter les brûleurs, le gaz combustible, produit par le four ERIM, ce gaz à 200 cal/m3 étant d'un prix de revient extrêmement faible.

Comme toujours, dans ce genre d'installations, il est nécessaire de prévoir une purge dans le circuit des gaz pour contrôler la teneur de ceux-ci en alcalis volatils. Cette purge, qui est réalisée en 23, au-dessus de la zone de clinkérisation 2, sert à préchauffer le gaz combustible provenant du four ERIM en envoyé par la conduite 24 dans les brûleurs 21 du clinkériseur, dans un échangeur 25 où les alcalis sont condensés.

La consommation des brûleurs au niveau du clinkériseur représente environ 20% de la consommation totale de calories de l'ensemble de l'appareil, par tonne de clinker.

On peut également injecter, au niveau du clinkériseur, une petite quantité de goudron de houille récupérée en 19 sur le four ERIM, pour éviter l'entrainement de particules fines détachées des boulets, à l'intérieur de la zone de clinkérisation et vers la partie supérieure du four à cuve, par les gaz en circulation dans le four.

Les gaz chauds sortant du clinkériseur à 1400°C et constitués par un fluide fortement oxydant, par exemple de l'air renfermant une faible proportion de $CO_2$ venant de la combustion au niveau des brûleurs 21, retrouvent les gaz sortant du réglage 81 des trémies distributrices et qui by-passent le clinkériseur ainsi que ceux qui sont éventuellement réintroduits en 82.

Ces gaz sont introduits à la partie supérieure des trémies distributrices 4 et assurent le préchauffage jusqu'à une température proche de la température de clinkérisation. La combustion totale du carbone étant effectuée avant l'entrée des boulettes dans le clinkériseur, le temps de séjour des boulettes dans le clinkérisuer peut être relativement court et, en conséquence, on peut régler le débit des matières solides à une valeur forte, c'est-à-dire permettant une productivité importante de l'installation. Il suffit pour faire varier le débit des matières solides de modifier la vitesse d'extraction et la vitesse d'alimentation du four.

On maîtrise le temps de séjour dans le clinkériseur de manière à assurer l'homogénéité des produits: ce temps de séjour est fonction de la dimension des pellets et d'environ 10 mn pour les produits envisagés.

A la sortie du clinkériseur, les particules de clinker tombent dans le refroidisseur où elles constituent un lit mobile se déplaçant en fonction de la vitesse d'extraction à la base du refroidisseur.

L'air froid envoyé par la soufflerie 10 à la base du refroidisseur constitué par un échangeur à cuve à contre-courant, rencontre des couches de particules de clinker de plus en plus chaudes, absorbe la chaleur de ces particules de clinker et s'échauffe jusqu'au voisinage de 1200° au sommet du refroidisseur, l'échangeur de chaleur à contre-courant étant équilibré.

Inversement, les particules de clinker se refroidissent et arrivent dans la zone d'extraction à une température faible, par exemple 100°.

Le fluide circulant à contre-courant des matières sert à la combustion du gaz envoyé dans le clinkériseur, puis à la combustion du carbone dans la partie préchauffeur et décarbonateur.

D'autre part, l'adjonction, en parallèle au four de clinkérisation, d'un four ERIM 15 de faible capacité permet d'utiliser des charbons flambants à faible prix de revient pour produire d'une part le carbone incorporé aux boulettes de matière crue et d'autre part le combustible d'appoint permettant le démarrage et l'entretien de la réaction de clinkérisation.

La production d'une tonne de clinker exige d'introduire 1,6 t de boulettes dans le four à cuve, ces boulettes renfermant environ 50 kg de carbone par tonne de boulettes. Il est nécessaire d'introduire à la base du refroidisseur 800 m3 de fluide froid par tonne de clinker produite, le fluide froid étant de l'air additionné d'un peu de fumées.

Suivant la nature des matières on pourra prélever 200 m3 par tonne de fluide à 1200° au niveau supérieur du refroidisseur, 650 m3 de fluide chaud pénétrant dans le clinkériseur. Les 55 kg de carbone sont produits sous forme de semi-coke à partir de 80 kg de charbon flambant sec au four ERIM, 60 m3 de gaz à 200 calories par m3 de pouvoir calorifique étant en outre produits par le four ERIM.

Le bilan thermique global de l'opération fait apparaître une consommation de 610 calories par kg de clinker de la qualité obtenue par voie sèche actuellement. L'economie réalisée est donc de 25% environ.

De plus, la plus grande partie de l'énergie thermique étant fournie à partir de charbon flambant sec ou de produits analogues (lignites), l'économie de prix à la thermie est de l'ordre de 21% par rapport au fuel. Dans ces conditions, l'economie réalisée sur le coût du combustible est de l'ordre de 40% par rapport au meilleur procédé par voie sèche actuel.

Les expériences de la demanderesse ont d'autre part montré qu'une installation industrielle rentable pouvait avoir des dimensions relativement faibles puisque la hauteur totale de cette installation peut être limitée éventuellement à 8 m.

En effet, le préchauffeur doit avoir une hauteur de 3 à 4 m le clinkériseur une hauteur de 1 m et le refroidisseur une hauteur de 2 à 3 m. Compte tenu des installations annexes, le dispositif est donc relativement compact.

Pour obtenir des unités à très grande production, il suffit d'augmenter la section de l'installation en particulier au niveau de l'échangeur supérieur, c'est-à-dire le préchauffeur, et au niveau de l'échangeur inférieur, c'est-à-dire le refroidisseur.

C'est ainsi qu'on peut montrer qu'une cimenterie d'une production de 1 million de tonnes de clinker par an aurait un diamètre de l'ordre de 10 m comme celui des grands hauts fourneaux construits à ce jour. Toutefois, il est préférable de se limiter à des diamètres de 5 m et de disposer de plusieurs installations en parallèle qui facilitent la continuité de la production. Pour de telles installations, les investissements nécessaires sont inférieurs aux investissements d'une cimenterie conventionnelle. La compacité de l'installation a également l'avantage de diminuer les pertes thermiques au niveau de la paroi du four.

D'autre part, l'échange calorifique étant excellent au niveau de l'échangeur supérieur et de l'échangeur inférieur, les gaz et les matieres sortent du four à basse température ce qui est un autre facteur d'amélioration du rendement thermique.

Enfin, la régulation du procédé est relativement facile car on dispose d'un nombre de paramètres permettant d'une part de maîtriser l'échelonnement des températures dans le préchauffeur et, d'autre part, de régler l'alimentation du clinkériseur et d'assurer un temps de séjour correct du produit dans l'enceinte de ce clinkériseur pour obtenir du clinker de composition homogène.

En faisant varier la dimension des boulettes, on peut règler par exemple le temps de combustion du carbone. On a montré que pour optimiser la productivité des échangeurs et le temps de séjour dans le clinkériseur, la dimension idéale du boulet doit se situer entre 10 et 30 mm, et de préférence supérieure à 15 mm, tout en sachant que ce paramètre dépend largement des facteurs liés aux matières premières utilisées (qualité de la matière crue et réactivité du carbone par exemple). Cependant, dans certains cas, la dimension des boulettes pourra être choisie en dehors de cet intervalle tout en restant supérieure à 6 mm car on a montré qu'il n'était pas possible d'utiliser dans de bonnes conditions des boulettes d'une dimension inférieure à cette limite. Un compromis doit donc être recherché en ce qui concerne la dimension des boulettes qu'il est nécessaire d'optimiser pour diminuer les pertes de charge du préchauffeur et du refroidisseur et en même temps faire fonctionner le fluidiseur et le distributeur de manière convenable.

Comme il est souhaitable d'assurer toute la combustion du carbone et d'équilibrer la zone de préchauffage des produits par les apports calorifiques du fluide chaud et la combustion de carbone, on caractérise pour une matière première déterminée, la quantité de carbone à inclure dans les pellets crues. La combustion de ce carbone peut être réglée suivant l'endroit où se fait l'injection de fluide chaude oxydant, soit qu'il provienne en totalité du clinkériseur, soit qu'il soit prélevé partiellement à la sortie de la zone 3 de préchauffage des gaz en by-passant le clinkériseur 2.

Différents dispositifs concernant le circuit des fluides sont donc possibles en fonction de la nature des matières premières, de la dimension des pellets, de la compacité de celles-ci etc.... Ces dispositifs peuvent être:

— soit un by-passage du clinkériseur par le fluide oxydant permettant une réinjection du fluide chaud à un niveau déterminé du préchauffeur,
— soit un balayage par le fluide oxydant du refroidisseur à clinker, ce fluide oxydant pouvant être de l'air ou un mélange d'air et de fumées prélevées sur l'évacuation des gaz et diminuant la teneur en oxygène du fluide,
— soit une injection partielle d'air et/ou de fumées au niveau des distributeurs assurant ainsi la régulation nécessaire automatique de l'alimentation du clinkériseur.

Un autre facteur sur lequel on peut jouer pour maitriser l'échelonnement des températures dans le préchauffeur est l'état de division du carbone au sein de la pâte avec laquelle on fabrique les boulettes. On peut également faire varier le degré de compacité des boulettes pour corriger dans une certaine mesure les temps de combustion du carbone.

L'automatisation du procédé peut utiliser un dispositif pour régler l'alimentation du clinkériseur en maintenant constante sa perte de charge et en assurant un temps de séjour correct du produit dans la partie à haute température qui travaille en fluidisation.

On voir donc que les principaux avantages du procédé et du dispositif suivant l'invention sont d'assurer la séparation des zones de décarbonatation et de clinkérisation en apportant dans chacune la quantité de chaleur adéquate, de permettre ainsi une économie substantielle dans la consommation de combustible, l'obtention de productivités élevées avec des installations dont le coût est inférieur aux installations conventionnnelles, et une régulation aisée du procédé pour lequel une automatisation complète est envisageable.

Par rapport aux procédés antérieurs, utilisant des pellets de matière crue ne renfermant pas de carbone, le procédé suivant l'invention a l'avantage de produire la décarbonatation et le préchauffage des matières au sein de chaque boulette par combustion du carbone contenu dans ces boulettes. C'est en effet dans cette zone de décarbonatation qu'il convient d'assurer la majeur partie des apports calorifiques, de telle sorte que les reactions endothermiques de la décarbonatation se compensent par les réactions exothermiques de combustion de carbone en $CO_2$.

Par rapport aux procédés utilisant des échanges de chaleur entre des gaz chauds et des matières pulvérulentes, on a l'avantage d'assurer des échanges de chaleur à contrecourant alors que les matières pulvérulentes ne peuvent être traitées que par des échanges à courants parallèles corrigés par l'effet de cyclones successifs. De plus, des collages sur les parois sont créés avec les matières pulvérulentes dès qu'un certain seuil de température est atteint.

Ceci permet de préchauffer les boulettes à haute température pour alimenter le clinkériseur ce qui diminue d'autant la quantité de combustible consommée au niveau de clinkériseur.

L'invention ne se limite pas au mode de réalisation qui vient d'être décrit, elle en comporte au contraire toutes les variantes et l'on peut imaginer des modifications de points de détail sans pour autant sortir du cadre de l'invention.

C'est ainsi que la forme du four à cuve utilisé pour la mise en oeuvre du procédé pourra être très différente de la forme décrite et représentée dans l'exemple ci-dessus. Par exemple, au lieu d'un seul clinkériseur on pourrait utiliser plusieurs clinkériseurs alimentés chacun par une ou plusieurs trémies.

Le dispositif de distributeur placé avant le clinkériseur permettant à celui-ci de travailler partiellement en fluidisation pourra être très différent du système décrit. Un distributeur mécanique peut être utilisé mais le réglage aérolique est plus souple. Les fluides froids peuvent être incorporés aux gaz en circulation dans le four à cuve à d'autres endroits pour modifier la composition et la réactivité de ces gaz.

Le dispositif peut être utilisé indépendamment d'un four à cuve tel qu'un four ERIM, pour la production de carbone et de gaz combustible cette association permettant cependant de réaliser des économies importantes sur les dépenses en combustibles.

**Revendications**

1. Procédé de fabrication de clinker de ciment par cuisson de la matière crue préparée à l'avance sous forme de boulettes dans un appareil comprenant, de haut en bas, une zone (1) de séchage, de préchauffage et de décarbonatation une zone (2) de clinkérisation et une zone (3) de refroidissement dans lesquelles les boulettes de matière circulent successivement de haut en bas, à contre courant d'un gaz comburant introduit à la base de la zone de refroidissement et circulant de bas en haut en entraînant les gaz formés dans l'appareil, la zone (1) de préchauffage et la zone (3) de refroidissement fonctionnant chacune comme un four à cuve et la zone de clinkérisation (2) étant constituée par un conduit resserré à axe vertical, relié vers le haut à la zone (1) de préchauffage et de décarbonatation par au moins un trémie (4) de distribution des boulettes de matière et débouchant vers le bas à la partie supérieure de la zone (3) de refroidissement et dans lequel est canalisé le comburant circulant de bas en haut de telle sorte que les boulettes de matière forment un lit fluidisé dans lequel est injecté un combustible, caractérisé par le fait que l'on alimente l'appareil en boulettes de matière crue de dimension supérieure à 6 mm constituées de matière crue mélangée à une certaine quantité de carbone déterminée de telle sorte que sa combustion produise à l'intérieur de chaque boulette la quantité de chaleur juste nécessaire pour y effectuer la décarbonatation de la matière, compte-tenu de la quantité de chaleur apportée de façon prévisible par les gaz circulant dans la zone de préchauffage et de décarbonatation (1), que ceux-ci sont constitués au moins par une partie des gaz sortant de la zone de clinkérisation (2) et sont introduits avec un débit réglable par les trémies distributrices (4) au dessous de la zone de préchauffage et de décarbonatation (1) et que, pendant le fonctionnement, on règle en fonction l'un de l'autre les débits des gaz et des matières de telle sorte que la réaction de décarbonatation effectuée grâce à la combustion du carbone soit pratiquement achevée à la base de la zone de préchauffage et de décarbonatation (1) et que les boulettes s'échauffent ensuite au contact des gaz chauds en descendant dans les trémies distributrices (4) pour atteindre une température proche de la température de clinkérisation à leur entrée dans la zone de clinkérisation (2) dans laquelle on injecte la quantité de combustible juste nécessaire pour provoquer et entretenir la réaction de clinkérisation.

2. Procédé de fabrication de clinker selon la revendication 1 caractérisé par le fait, que l'on règle la température des gaz remontant dans la zone de préchauffage et de décarbonatation (1) par mélange des gaz sortant de la zone de clinkérisation (2) avec un débit réglable de gaz ayant circulé dans la zone de refroidissement (3), prélevés à la partie supérieure de celle-ci et by-passant la zone de clinkérisation (2).

3. Procédé de fabrication de clinker selon la revendication 2, caractérisé par le fait que l'on règle aérodynamiquement le débit des matières déversées dans la zone de clinkérisation (2) par injection de gaz dans les talus de matières distribuées par les trémies (4) d'au moins une partie des gaz prélevés dans la zone de refroidissement (3).

4. Procédé de fabrication de clinker suivant la revendication 1, caractérisé par le faitr que les boulettes ont une dimension moyenne comprise entre 10 et 30 mm et de préférence supérieure à 15 mm.

5. Procédé de fabrication de clinker suivant la revendication 1, caractérisé par le fait que le carbone incorporé aux boulettes sous forme divisée est constitué par des particules de semicoke obtenues par cokéfaction de charbon tel qu'un charbon flambant sec ou de lignite dans un four à cuve (15).

6. Procédé de fabrication de clinker suivant la revendication 4, caractérisé par le fait qu'un apport de chaleur additionnel au niveau du clinkériseur (2) est obtenu au moins partiellement par combustion d'un gaz obtenu au cours de la cokéfaction du charbon dans le four (15).

7. Procédé de fabrication de clinker suivant l'une quelconque des revendications 1 et 2, caractérisé par le fait que l'on crée une perte de charge constante dans le clinkériseur en fluidisation, si l'on considère le sens de circulation des gaz et que l'on règle le débit des matières solides dans le clinkériseur (2) en faisant varier la vitesse d'extraction et la vitesse d'alimentation des matières solides.

8. Procédé de fabrication suivant la revendication 1, caractérisé par le fait que l'on règle la température et la teneur en oxygène du fluide comburant par injection dans le circuit d'une certaine quantité de fumées froides prélevées à la sortie supérieure de l'appareil.

9. Procédé de fabrication de clinker suivant la revendication 1, caractérisé par le fait que l'on injecte dans le réacteur, au niveau de la zone de clinkérisation (2), des goudrons de houille ou du fuel-oil pour éviter l'entrainement de particules à fine granulomètrie par les gaz en circulation dans le réacteur.

10. Dispositif de clinkérisation pour la mise en oeuvre du procédé selon la revendication 1, comprenant trois parties superposées, un échangeur supérieur (1), en forme de cuve, formant une zone de préchauffage reliée par au moins une trémie de distribution (4) à un conduit resserré (2) formant une zone de clinkérisation et débouchant à la partie supérieure d'un échangeur inférieur (3), en forme de cuve, formant une zone de refroidissement, un dispositif d'alimentation avec un débit réglable de l'echangeur supérieur (1) en boulettes de matiée crue contenant une quantité déterminée de carbone, un dispositif (30) d'extraction des matières avec un débit réglable à la base de l'échangeur inférieur (3) des moyens (21) d'injection de combustible dans le conduit resserré (2) et un moyen (10) de soufflage d'air à la base de l'échangeur inférieur (3) avec un débit réglable, pour l'etablissement d'une circulation de bas en haut du gaz comburant à contre-courant des matières, caractérisé par le fait que le conduit resserré (2) est alimenté par une trémie centrale (20) dans laquelle débouche la partie inférieure (41) de chaque trémie distributrice (4) et qui limite un espace fermé par un dôme (22) dans lequel se rassemblent les gaz chauds sortant du conduit (2) et relié par une conduite (44) munie d'une vanne de réglage du débit à un organe (43) de distribution régulière des gaz dans la partie supérieure de chaque trémie (4).

11. Dispositif de clinkérisation selon la revendication 10, caractérisé par le fait que chaque trémie distributrice (4) est munie à sa sortie (41) de moyens (81) de réglage du débit des matières déversées dans la trémie centrale (20).

12. Dispositif de clinkérisation selon la revendication 11, caractérisé par le fait qu'il comprend un ensemble de canalisation de recyclage (8) reliées à un collecteur (7) de prélèvement d'une fraction des gaz échauffés dans l'échangeur inférieur (3), placé à la partie supérieur de ce dernier.

13. Dispositif de clinkérisation selon les revendications 10, 11 et 12 caractérisé par le fait que les moyens de règlage du débit des matières sont constitués par des injecteurs (81) munis de moyens de réglage du débit, débouchant à la base de chaque trémie distributrice (4) dans le talus de matière formé à la sortie (41) de celle-ci et reliés aux canalisations de recyclage (8).

14. Dispositif de clinkérisation selon la revendication 13, caractérisé par le fait qu'il comprend des moyens d'injection (82) dans les trémies de distribution (4) d'une partie des gaz recyclés par les canalisations (8) pour le règlage de la température des gaz remontant dans les trémies (4) et l'échangeur supérieur (1).

**Patentansprüche**

1. Verfahren zur Herstellung von Zementklinker durch Brennen des vorher hergestellten Rohmaterials in Form von Pellets in einer Vorrichtung, die von oben nach unten eine Trocken-, Vorwärm- und Entsäureungszone (1), eine Verklinkerungszone (2) und eine Kühlungszone (3) umfaßt, in welchem Zonen die Materialpellets aufeinanderfolgend von oben nach unten im Gegenstrom zu einen als Verbrennungsmittel dienenden Gas umlaufen, das an der Basis der Kühlungszone zugeführt wird und von unten nach oben zirkuliert, während sie die in der Vorrichtung entstandenen Gase mitreißen, wobei die Vorwärmzone (1) und die Kühlungszone (3) jeweils wie ein Schacht-bzw. Entsäuerungsofen arbeiten und die Verklinkerungszone (2) aus einer verengten Leitung mit vertikaler Achse besteht, die nach oben mit der Vorwärm- und Entsäuerungszone (1) mittels wenigstens einem Verteilungsbunker (4) für die Materialpellets verbunden ist und nach unten in den oberen Abschnitt der Kühlungszone (3) mündet und in welche das von unten nach oben zirkulierende Verbrennungsmittel so eingeleitet wird, daß die Materialteilchen ein Wirbelbett bilden, in welches ein Brennstoff eingespritzt wird, dadurch gekennzeichnet, daß in die Vorrichtung rohe Materialpellets mit einer Korngrößenverteilung von mehr als 6 mm eingebracht werden, die aus einer Mischung von Rohmaterial mit einer Menge Kohlenstoff bestehen, welche so bemessen ist, daß ihre Verbrennung im Inneren jedes der Pellets genau jene Wärmemenge erzeugt, die für die Entsäuerung des Materials erforderlich ist, wobei jene Wärmemenge berücksichtigt wird, die auf vorhersehbare Weise von den in der Vorwärm- und Entsäuerungszone (1) zirkulierenden Gasen zugeführt wird, daß diese Gase wenigstens zum Teil aus den von der Verklinkerungszone (2) abgegebenen Gasen und in einer mittels der Verteilerbunker (4) regelbaren Menge unterhalb der Vorwärm- und Entsäuerungszone (1) eingebracht werden und daß während des Betriebes die Gas- und Materialmengen in Abhängigkeit voneinander so gesteuert werden, daß die durch die Verbrennung des Kohlenstoffs bewirkte Entsäuerungsreaktion praktisch auf dem Grund der Vorwärm- und Entsäuerungszone (1) erfolgt und daß die Pellets sich darauf bei der Berührung mit den heißen Gasen beim Absinken in die Verteilerbunker (4) erwärmen und eine Temperatur annähernd der Verklinkerungstemperatur beim Eintritt in die Verklinkerungszone (2) annehmen, in welche genau jene Menge an Brennstoff eingespritzt wird, die erforderlich ist, um die Verklinkerungsreaktion einzuleiten und aufrechtzuerhalten.

2. Verfahren zur Herstellung von Klinker nach Anspruch 1, dadurch gekennzeichnet, daß man die Temperaturen der in die Vorwärm- und Entsäuerungszone (1) aufsteigenden Gase durch Mischen der aus der Verklinkerungszone (2) austretenden Gase mit einer regelbaren Menge von Gasen regelt, die in der Kühlungszone (3) zirkuliert haben und im oberen Teil derselben entnommen und unter Umgehung der Verklinkerungszone (2) zugeführt werden.

3. Verfahren zur Herstellung von Klinker nach Anspruch 2, dadurch gekennzeichnet, daß die Menge an in die Verklinkerungszone eingebrachten Materialien aerodynamisch durch Einspritzen wenigstens eines Teiles der aus der Kühlungszone (3) entnommenen Gase in die Böschungen der von den Bunkern (4) verteilten Materialien geregelt wird.

4. Verfahren zur Herstellung von Klinker nach Anspruch 1, dadurch gekennzeichnet, daß die Pellets eine durchschnittliche Korngrößenverteilung von 10—30 mm und vorzugsweise von mehr als 15 mm aufweisen.

5. Verfahren zur Herstellung von Klinker nach Anspruch 1, dadurch gekennzeichnet, daß der in feinteiliger Form in die Pellets eingebrachte Kohlenstoff aus Schwelkoksteilchen besteht, die bei Verkokung von Kohle, wie z.B. trockener Gasflammkohle oder Lignit (Braunkohle) in einem Schachtofen (15) erhalten werden.

6. Verfahren zur Herstellung von Klinker nach Anspruch 4, dadurch gekennzeichnet, daß eine zusätzliche Wärmezufuhr im Bereich der Verklinkerungszone (2) wenigstens teilweise durch Verbrennung eines Gases erzielt wird, das während der Verkokung der Kohle im Ofen (15) anfällt.

7. Verfahren zur Herstellung von Klinker nach einem der Ansprüche 1 oder 2, dadurch gekennzeichnet, daß man einen konstanten Verlust bzw. Abgang an eingebrachtem Material in der Verklinkerungszone in der Wirbelschicht unter Berücksichtigung der Umlaufrichtung der Gase schafft und daß die Menge an Feststoffen in der Verklinkerungszone (2) durch Variieren der Extraktionsgeschwindigkeit und der Zufuhrgeschwindigkeit an Feststoffen geregelt wird.

8. Herstellungsverfahren nach Anspruch 1, dadurch gekennzeichnet, daß die Temperatur und der Sauerstoffgehalt des Verbrennungsfluids durch Einspritzen einer bestimmten Menge von kaltem Rauch, der am oberen Ausgang der Vorrichtung entnommen wird, in den Kreislauf geregelt wird.

9. Verfahren zur Herstellung von Klinker nach Anspruch 1, dadurch gekennzeichnet, daß in den Reaktor auf der Höhe der Verklinkerungszone (2) Steinkohlenteer oder Heizöl eingespritzt wird, um das Mitreißen der feinen Feststoffteilchen durch die im Reaktor zirkulierenden Gase zu verhindern.

10. Verklinkerungsvorrichtung zur Durchführung des Verfahrens nach Anspruch 1, die aus drei übereinander gelegenen Abschnitten besteht, einem oberen Wärmeaustauscher (1) in Form eines Schachtes der eines Vorwärmzone bildet, die mittels wenigstens eines Verteilerbunkers (4) mit einer verengten Leitung (2) verbunden ist, welche eine Verklinkerungszone bildet und in den oberen Abschnitt eines unteren Wärmeaustauschers (3) in Form eines Schachts ausläuft, der eine Kühlungszone bildet, wobei eine Zufuhrvorrichtung vorgesehen ist, um dem oberen Wärmeaustauscher (1) eine regelbare Menge an Pellets von Rohmaterial zuzuführen, das eine vorgegebene Menge an Kohlenstoff enthält, mit einer Vorrichtung (30) zur Extraktion von Materialien regelbarer Menge an der Basis des unteren Wärmeaustauschers (3), einer Einrichtung (21) zum Einspritzen von Brennstoff in die verengte Leitung (2) und einer Einrichtung (10) zum Einblasen von Luft in einer regelbaren Menge an der Basis des unteren Wärmeaustauschers (3) zur Erzeugung einer Zirkulation von unten nach oben des als Verbrennungsmittel dienenden Gases im Gegenstrom zu den Materialien, dadurch gekennzeichnet, daß die verengte Leitung (2) von einem zentralen Bunker (20) gespeist wird, in welchen der untere Abschnitt (41) jedes der Verteilerbunker (4) mündet und der einen durch eine Kuppel (22) geschlossenen Raum begrenzt, in welchem sich die aus der Leitung (2) austretenden heißen Gase sammeln und der über eine mit einer Regelklappe für die abgegebene Menge versehenen Leitung (44) mit einem Organ (43) für die gleichmäßige Verteilung der Gase im oberen Teil jedes der Verteilerbunker (4) verbunden ist.

11. Verklinkerungsvorrichtung nach Anspruch 10, dadurch gekennzeichnet, daß jeder der Verteilerbunker (4) an seinem Ausgang (41) mit einer Einrichtung (81) für die Regelung der in den zentralen Bunker (20) eingebrachten Materialmenge versehen ist.

12. Verklinkerungsvorrichtung nach Anspruch 11, dadurch gekennzeichnet, daß sie mit einer Rückführungskanalisationsanordnung (8) versehen ist, die mit einer Sammeleinrichtung (7) zur Enttnahme einer Teilmenge der im unteren Wärmeaustauscher (3) erwärmten Gase verbunden ist, welche am oberen Teil des letzteren angeordnet ist.

13. Verklinkerungsvorrichtung nach den Ansprüchen 10, 11 und 12, dadurch gekennzeichnet, daß die Einrichtungen zur Regelung der abgegebenen Materialmengen aus Einspritzeinrichtungen (81) bestehen, die mit Mengenregelungseinrichtungen versehen sind und an der Basis jedes der Verteilungsbunker (4) in die Böschung des am Ausgang (41) desselben aufgeschütteten Materialhaufens münden und mit der Rückführungskanalisation (8) verbunden sind.

14. Verklinkerungsvorrichtung nach Anspruch 13, dadurch gekennzeichnet, daß sie mit Einspritzeinrichtungen (82) in den Verteilerbunker (4) für einen Teil des durch Kanalisation (8) rückgeführten Gases für die Regelung der Temperatur der in den Verteilerbunkern (4) und den oberen Wärmeaustauscher (1) aufsteigenden Gase versehen ist.

**Claims**

1. Process for the manufacture of cement clinker by burning raw material prepared in advance in the form of pellets in an apparatus comprising, from top to bottom, a drying, preheating, and decarbonation zone (1), a clinkering zone (2) and a cooling zone (3), in which zones the pellets of material circulate successively from top to bottom, countercurrent to a combustive gas introduced at the base of the cooling zone and circulating from bottom to top while entraining the gases formed in the apparatus, the preheating zone (1) and the cooling zone (3) each functioning as a shaft-furnace, and the clinkering zone (2) consisting of a restricted duct with a vertical axis, joined at the top to the preheating and decarbonation zone (1) by at least one hopper (4) for distribution of the material pellets and opening at the bottom into the upper part of the cooling zone (3), and in which the combustive gas circulating from the bottom upwards is chanelled so that the material pellets form a fluidised bed into which a fuel is injected, characterised in that the apparatus is supplied with raw material pellets of a dimension greater than 6 mm which consist of a raw material mixed with a certain quantity of carbon determined so that its combustion produces inside each pellet exactly the quantity of heat required to produce the decarbonation of the material in it, taking account of the quantity of heat introduced in a predictable manner by the gases circulating in the preheating and decarbonation zone (1), in that the latter gases consist at least of a part of the gases leaving the clinkering zone (2) and are introduced at a rate which is capable of regulation by the distribution hoppers (4) above the preheating and decarbonation zone (1), and in that, during the operation, the flow rates of the gases and of the materials are regulated with respect to one another so that the decarbonation reaction produced by virtue of the combustion of the carbon is practically complete at the base of the preheating and decarbonation zone (1) and in that the pellets are then heated in contact with the hot gases while moving down in the distribution hoppers (4) to reach a temperature close to the clinkering temperature on their entry into the clinkering zone (2) into which is injected the quantity of fuel just required to produce and to maintain the clinkering reaction.

2. Process for the manufacture of clinker according to claim 1, characterised in that the temperature of the gases rising in the preheating and decarbonation zone (1) is regulated by mixing the gases leaving the clinkering zone (2) with a controllable flow of gas which has circulated in the cooling zone (3), these being withdrawn at the upper part of the latter zone and by-passing the clinkering zone (2).

3. Process for the manufacture of clinker according to claim 2, characterised in that the flow of the materials discharged into the clinkering zone (2) is regulated aerodynamically by gas injection into the banks of materials distributed by the hoppers (4), of at least a part of the gases withdrawn in the cooling zone (3).

4. Process for the manufacture of clinker according to claim 1, characterised in that the pellets have a mean dimension of between 10 and 30 mm and preferably greater than 15 mm.

5. Process for the manufacture of clinker according to claim 1, characterised in that the carbon incorporated in the pellets in a divided form consists of particles of semi-coke obtained by coking of a coal such as a dry bright-burning coal or of lignite in a tank furnace (15).

6.. Process for the manufacture of clinker according 'to claim 4, characterised in that an additional input of heat in the region of the clinkeriser (22) is obtained at least partially by combustion of a gas obtained during the coking of the coal in the furnace (15).

7. Process for the manufacture of clinker according to either one of claims 1 and 2, characterised in that a constant loss of charge is created in the clinkeriser during fluidisation, taking into consideration the direction of circulation of the gases, and in that the rate of flow of the solid materials in the clinkeriser (2) is regulated by varying the speed of discharge and the speed of feed of solid materials.

8. Manufacturing process according to claim 1, characterised in that the temperature and the oxygen content of the combustive fluid are regulated by injection into the circuit of a certain quantity of cold fumes abstracted at the upper outlet of the apparatus.

9. Process for the manufacture of clinker according to claim 1, characterised in that coal tar or fuel oil tar is injected into the reactor, in the region of the clinkerisation zone (2), to avoid the entrainment of finely sized particles by the gases circulating in the reactor.

10. Clinkerisation device for the operation of the process according to claim 1, comprising three superposed parts, a shaft-shaped upper exchanger (1) forming a preheating zone connected by at least one distribution hopper (4) to a constricted duct (2) forming a clinkerisation zone and opening into the upper part of a shaft-shaped lower exchanger (3) forming a cooling zone, a device for supplying the upper exchanger (1) with a controllable flow of pellets of raw material containing a determined quantity of carbon, a device (30) for discharge of materials at a controllable rate at the base of the lower exchanger (3), means (21) of injection of fuel into the constricted duct (2) and a means (10) for blowing air at a controllable rate at the base of the lower exchanger (3), to establish an upward circulation of the combustive gas counter current to the materials, characterised in tht the constricted duct (2) is supplied by a central hopper (20) into which discharges the lower part (41) of each distribution hopper (4) and which confines a space enclosed by a dome (22) in which the hot gases leaving the duct (2) are collected and which is joined by a duct (44) fitted with a flow control valve to an instrument (43) for regular distribution of gases in the upper part of each hopper (4).

11. Clinkerisation device according to claim 10, characterised in that each distribution hopper (4) is fitted at its exit (41) with means (81) for controlling the flow of the materials poured into the central hopper (20).

12. Clinkerisation device according to claim 11, characterised in that it comprises a system of recycling piping (8) joined to a collector (7), situated in the upper part of the lower exchanger (3), for withdrawing a proportion of the gases heated in the latter.

13. Clinkerisation device according to claims 10, 11 and 12, characterised in that the means for controlling the flow of materials consist of injectors (81), equipped with means for controlling the flow, which issue at the base of each distribution hopper (4) into the bank of material formed at the exit (41) of the latter, and joined to the recycling piping (8).

14. Clinkerisation device according to claim 13, characterised in that it comprises means (82) for injecting into the distribution hoppers (4) a part of the gases recycled by the piping (8) for the regulation of the temperature of the gases rising in the hoppers (4) and in the upper exchanger (1).

0 033 688

Fig 1

Fig 2